# EUROPEAN PATENT APPLICATION

(11) **EP 3 832 874 A1**
(43) Date of publication of application: **09.06.2021**
(21) Application number: 19213054.0
(22) Date of filing: 03.12.2019
(51) Int. Cl.: H02M 5/458, H02M 7/23, H02M 7/487, H02M 1/14, H02M 7/493

(54) **CONVERTER ASSEMBLY**

(71) Applicant: ABB Schweiz AG, 5400 Baden (CH)
(72) Inventor: Paatero, Esa-Kai, 00380 Helsinki (FI)
(74) Representative: Kolster Oy Ab

(57) **Abstract**

A converter assembly comprising a primary source connection (41) comprising at least one phase, a primary source converter system (8) comprising a plurality of parallel connected primary source converter legs (91, 92) for each phase of the primary source connection (41), a DC link (2) connected electrically to a direct current side of the primary source converter system (8), a control system (909) adapted to control the primary source converter system (8), the control system (909) being adapted to provide a grid support operation for supplying energy from the DC link (2) to the primary source connection (41). Each of the plurality of primary source converter legs (91, 92) is a multilevel converter leg, and the control system (909) is adapted to operate the plurality of parallel connected converter legs for each phase in an interleaved mode during the grid support operation.

## Description

### FIELD OF THE INVENTION

The present invention relates to a converter assembly according to a preamble of claim 1.

It is known in the art to provide a grid support operation, in which excess energy is supplied from a DC link of a converter assembly to a primary alternating current supply of the converter assembly, wherein the excess energy is energy not required by a load of the converter assembly. In connection with known converter assemblies, said grid support operation causes some ripple in the primary alternating current supply.

### BRIEF DESCRIPTION OF THE INVENTION

An object of the present invention is to provide a converter assembly whose grid support operation causes less ripple than grid support operations of known converter assemblies.

The invention is based on the idea of providing a converter assembly with a plurality of parallel connected multilevel converter legs per each phase of the primary source connection, and operating the parallel connected multilevel converter legs in an interleaved mode during the grid support operation.

An advantage of the converter assembly of the invention is that it enables reducing ripple caused in the primary alternating current supply by the grid support operation.

### BRIEF DESCRIPTION OF THE DRAWINGS

In the following the invention will be described in greater detail by means of preferred embodiments with reference to the attached drawings, in which
Figure 1 shows a simplified circuit diagram of a converter assembly according to an embodiment of the invention;
Figure 2 shows parallel connected primary source converter legs of the converter assembly of Figure 1; and
Figure 3 shows portions of controls signals of the parallel connected primary source converter legs of Figure 2 during a grid support operation.

### DETAILED DESCRIPTION OF THE INVENTION

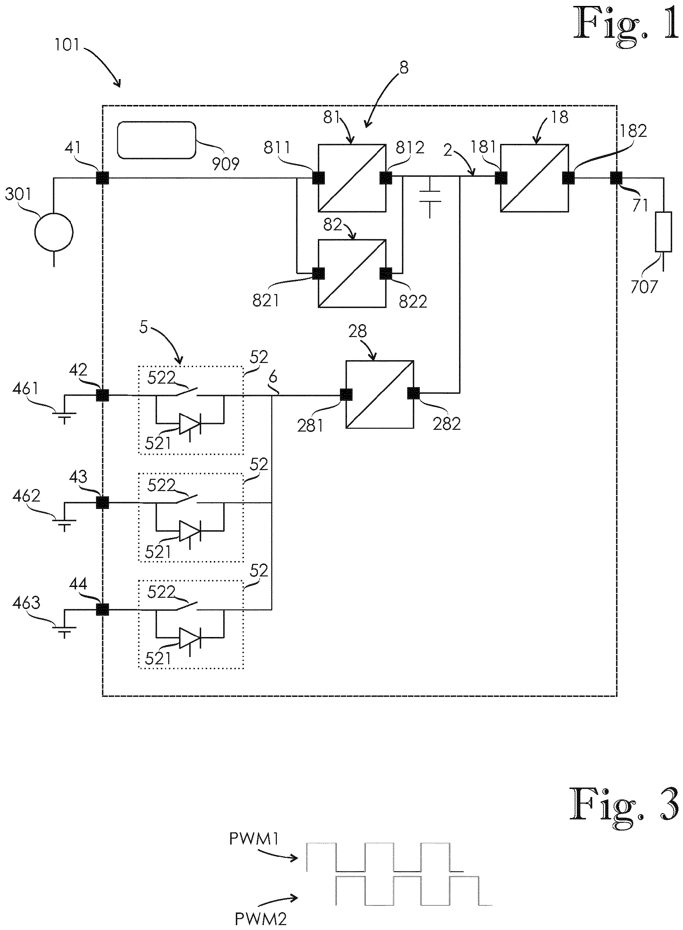

Figure 1 shows a simplified circuit diagram of a converter assembly 101 comprising a primary source connection 41, three secondary source connection 42, 43 and 44, a DC link 2, a load connection 71, a primary source converter system 8, a secondary source side converter 28, a load side converter 18, a switch system 5 and a control system 909.

The primary source connection 41 comprises one phase, and is adapted to be connected to a primary alternating current supply 301. In an alternative embodiment, the primary source connection is a multiphase connection adapted to be connected to a multiphase primary alternating current supply such as a utility grid.

The load connection 71 is adapted to be connected to a load 707. The load connection 71 is a single phase alternating current connection. In an alternative embodiment, the load connection is a multiphase alternating current connection. In a further alternative embodiment, the load connection is a direct current connection.

The primary source converter system 8 has an alternating current side connected electrically to the primary source connection 41, and a direct current side connected electrically to the DC link 2. The primary source converter system 8 comprises a first primary source converter 81 and a second primary source converter 82 connected in parallel. Therefore, a first connection 811 of the first primary source converter 81, and a first connection 821 of the second primary source converter 82 are connected electrically to the primary source connection 41, and a second connection 812 of the first primary source converter 81, and a second connection 822 of the second primary source converter 82 are connected electrically to the DC link 2.

Herein, two components are defined to be connected electrically to each other when there is a connection between the components enabling transfer of electric energy between the components.

The DC link 2 comprises DC link capacitance. The DC link 2 is connected electrically to the load connection 71 through the load side converter 18. The load side converter 18 has a first connection 181 connected electrically to the DC link 2, and a second connection 182 connected electrically to the load connection 71. The first connection 181 is a direct current connection, and the second connection 182 is an alternating current connection.

In an embodiment where the load connection is a direct current connection, the load side converter is a direct-current converter, or DC-to-DC converter. In an alternative embodiment where the load connection is a direct current connection, the load side converter is omitted.

The secondary source side converter 28 is a bidirectional direct-current converter whose first connection 281 is connected electrically to the secondary source connection 42, 43 and 44 through a secondary source bus bar system 6 and the switch system 5. The secondary source connection 42, 43 and 44 are direct current connections. A second connection 282 of the secondary source side converter 28 is connected electrically to the DC link 2. In an alternative embodiment, the secondary source side converter is a unidirectional direct-current converter adapted to supply energy to the DC link.

The switch system 5 comprises three switch units 52 each connected electrically between a corresponding secondary source connection and the secondary source bus bar system 6. A first switch unit is connected electrically between the secondary source connection 42 and the secondary source bus bar system 6. A second switch unit is connected electrically between the secondary source connection 43 and the secondary source bus bar system 6. A third switch unit is connected electrically between the secondary source connection 44 and the secondary source bus bar system 6.

Each switch unit 52 of the switch system 5 comprises a first switch 521 and a second switch 522 connected in parallel, wherein the first switch 521 has a higher switching speed than the second switch 522, and the second switch 522 has lower conduction losses than the first switch 521. The first switch 521 is a thyristor, and the second switch 522 is a mechanical switch. In an alternative embodiment, each switch unit of the switch system comprises only one switch, which is a mechanical switch.

The secondary source connections 42, 43 and 44 are connected to secondary current supplies 461, 462 and 463, respectively. Each of the secondary current supplies 461, 462 and 463 has a different type than the other secondary current supplies such that cyclic and/or thermal performances of the secondary current supplies differ from each other.

The secondary current supply 461 is a rechargeable battery, the secondary current supply 462 is a capacitor, and the secondary current supply 463 is a kinetic source. In an alternative embodiment, secondary current supplies comprise at least one of the following: a photovoltaic cell, a fuel cell, a wind power plant. In a further alternative embodiment, the converter assembly comprises at least one secondary source connection, which is an alternating current connection, and connected electrically to the DC link through a secondary source side converter having an alternating current side connected electrically to the secondary source connection, and a direct current side connected electrically to the DC link.

In an alternative embodiment, the converter assembly comprises only one secondary source connection, and the only switch unit of the switch system comprises only one switch, which is a mechanical switch. In said embodiment, one mechanical switch is sufficient since there is no need to perform quick transfers between different secondary current supplies. In a further alternative embodiment, the converter assembly does not comprise any secondary source connections.

The control system 909 is adapted to control the primary source converter system 8, the load side converter 18, the secondary source side converter 28 and the switch system 5. The control system 909 is adapted to provide a grid support operation for supplying energy from the DC link 2 to the primary source connection 41. Naturally, the control system 909 is also adapted to provide a load support operation for supplying energy from the DC link 2 to the load connection 71.

The grid support operation enables transferring energy from the secondary source connections 42, 43 and 44 to the primary source connection 41 through the DC link 2. Therefore, energy from the secondary current supplies 461, 462 and 463 not required by the load 707 can by supplied to the primary alternating current supply 301. Further, the grid support operation enables transferring energy from the load connection 71 to the primary source connection 41 through the DC link 2.

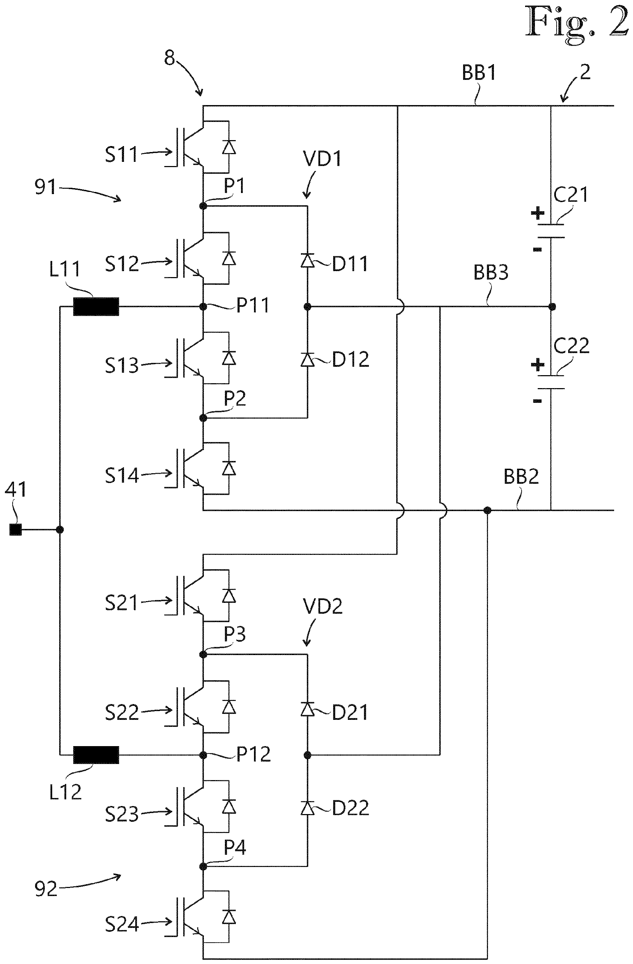

Figure 2 shows that the primary source converter system 8 comprises two parallel connected primary source converter legs denoted as 91 and 92. Each of the primary source converter legs 91 and 92 has an alternating current side connected electrically to the primary source connection 41, and a direct current side connected to the DC link 2. In an alternative embodiment, the primary source converter system comprises two or more parallel connected primary source converter legs for each phase of the primary source connection.

The primary source converter leg 91 is located in the first primary source converter 81, and the primary source converter leg 92 is located in the second primary source converter 82. In an alternative embodiment, the plurality of parallel connected primary source converter legs of the primary source converter system is located in a single primary source converter.

The DC link 2 comprises a first bus bar BB1, a second bus bar BB2, a third bus bar BB3, a first capacitor C21 and a second capacitor C22. The first capacitor C21 and the second capacitor C22 are connected in series between the first bus bar BB1 and the second bus bar BB2. The third bus bar BB3 is connected electrically between the first capacitor C21 and the second capacitor C22.

Each of the primary source converter legs 91 and 92 is a three level converter leg comprising four controllable switches adapted to be controlled by the control system 909. The primary source converter leg 91 comprises controllable switches S11, S12, S13 and S14 connected in series between the first bus bar BB1 and the second bus bar BB2, and a diode valve VD1. The primary source converter leg 92 comprises controllable switches S21, S22, S23 and S24 connected in series between the first bus bar BB1 and the second bus bar BB2, and a diode valve VD2. The primary source connection 41 is connected electrically between controllable switches S12 and S13 of the primary source converter leg 91, and between controllable switches S22 and S23 of the primary source converter leg 92.

Controllable switches S11 to S24 are Insulated Gate Bipolar Transistors (IGBTs) with anti-parallel diodes. The control system 909 is adapted to control the controllable switches S11 to S24 by a pulse width modulation (PWM) method.

In alternative embodiments, the controllable switches of the multilevel converter legs are other type of high frequency switching elements than IGBTs. In an alternative embodiment, the controllable switches of the multilevel converter legs are field-effect transistors (FET).

In an alternative embodiment, the primary source converter system comprises a plurality of parallel connected primary source converter legs for each phase of the primary source connection. Number of levels of the primary source converter legs is not limited to three but also higher level converter legs are usable. In other words, a multilevel converter leg is a three level converter leg or a higher level converter leg such as a five level converter leg.

The converter assembly comprises a filter inductor L11 for the primary source converter leg 91, and a filter inductor L12 for the primary source converter leg 92. The filter inductor L11 is connected electrically between the primary source connection 41 and a point P11 located electrically between controllable switches S12 and S13. The filter inductor L12 is connected electrically between the primary source connection 41 and a point P12 located electrically between controllable switches S22 and S23.

The diode valve VD1 comprises diodes D11 and D12 connected in series. The diode valve VD1 is connected antiparallel between a point P1 located electrically between controllable switches S11 and S12, and a point P2 located electrically between controllable switches S13 and S14. The third bus bar BB3 is connected electrically between the series connected diodes D11 and D12.

The diode valve VD2 comprises diodes D21 and D22 connected in series. The diode valve VD2 is connected antiparallel between a point P3 located electrically between controllable switches S21 and S22, and a point P4 located electrically between controllable switches S23 and S24. The third bus bar BB3 is connected electrically between the series connected diodes D21 and D22.

During the grid support operation, the control system 909 operates the parallel connected converter legs 91 and 92 in an interleaved mode in order to reduce ripple in the electricity supplied from the DC link 2 to the primary source connection 41. In the interleaved mode, control signals for the parallel connected converter legs 91 and 92 are identical, but there is a time difference between them.

Figure 3 shows portions of controls signals of the parallel connected primary source converter legs 91 and 92 during the grid support operation. In Figure 3, PWM1 is a portion of a controls signal generated by the control system 909, and adapted to control the primary source converter leg 91, and PWM2 is a portion of a controls signal generated by the control system 909, and adapted to control the primary source converter leg 92.

A frequency of the controls signals PWM1 and PWM2 is 20 kHz. In alternative embodiments, a frequency of the controls signals of the plurality of parallel connected primary source converter legs is at least 5 kHz.

A phase shift between the controls signals PWM1 and PWM2 is 180°. In an alternative embodiment where the primary source converter system comprises N parallel connected primary source converter legs for each phase of the primary source connection, a phase shift between controls signal of the parallel connected converter legs is 360°/N. In further alternative embodiments, a phase shift between controls signals of the parallel connected converter legs is in a range of 5° to 360°/N.

It will be obvious to a person skilled in the art that the inventive concept can be implemented in various ways. The invention and its embodiments are not limited to the examples described above but may vary within the scope of the claims.

## Claims

1. A converter assembly comprising:
a primary source connection (41) comprising at least one phase, and adapted to be connected to a primary alternating current supply (301);
a load connection (71) adapted to be connected to a load (707);
a primary source converter system (8) having an alternating current side connected electrically to the primary source connection (41), and a direct current side, the primary source converter system (8) comprising a plurality of parallel connected primary source converter legs (91, 92) for each phase of the primary source connection (41);
a DC link (2) connected electrically between the direct current side of the primary source converter system (8) and the load connection (71), the DC link (2) comprising DC link capacitance;
a control system (909) adapted to control the primary source converter system (8), the control system (909) being adapted to provide a grid support operation for supplying energy from the DC link (2) to the a primary source connection (41),
**characterized in that** each of the plurality of primary source converter legs (91, 92) is a multilevel converter leg, and the control system (909) is adapted to operate the plurality of parallel connected primary source converter legs (91, 92) for each phase in an interleaved mode during the grid support operation.

2. A converter assembly according to claim 1, **characterized in that** the converter assembly comprises at least one secondary source connection (42, 43, 44) adapted to be connected electrically to a secondary current supply (461, 462, 463), wherein the grid support operation is adapted to transfer energy from the at least one secondary source connection (42, 43, 44) to the primary source connection (41) through the DC link (2).

3. A converter assembly according to claim 2, **characterized in that** the converter assembly comprises a secondary source side converter (28) connected electrically between the at least one secondary source connection (42) and the DC link (2), and the control system (909) is adapted to control the secondary source side converter (28).

4. A converter assembly according to any one of preceding claims, **characterized in that** the converter assembly comprises a filter inductor (L11, L12) for each of the plurality of parallel connected primary source converter legs (91, 92).

5. A converter assembly according to any one of preceding claims, **characterized in that** the converter assembly comprises a load side converter (18) connected electrically between the DC link (2) and the load connection (71), and the control system (909) is adapted to control the load side converter (18).

6. A converter assembly according to any one of preceding claims, **characterized in that** the primary source converter system (8) comprises N parallel connected primary source converter legs (91, 92) for each phase of the primary source connection (41), and during the grid support operation a phase shift between controls signals of the parallel connected primary source converter legs (91, 92) is in a range of 5° to 360°/N.

7. A converter assembly according to any one of preceding claims, **characterized in that** each of the plurality of primary source converter legs (91, 92) is a three level converter leg.
